# EUROPÄISCHE PATENTANMELDUNG

(11) **EP 1 574 388 A1**
(43) Veröffentlichungstag der Anmeldung: **14.09.2005**
(21) Anmeldenummer: 05003019.6
(22) Anmeldetag: 12.02.2005
(51) Int. Cl.: B60N 2/20, B60N 2/433

(54) **Beschlag für einen Fahrzeugsitz**

(30) Priorität: 09.03.2004 DE 102004011785
(71) Anmelder: KEIPER GmbH & Co. KG, 67657 Kaiserslautern (DE)
(72) Erfinder: Kraus, Martin, 67806 Katzenbach (DE); Hänsel, Richard, 55237 Flonheim (DE); Nock, Eckhard, 85301 Güntersdorf (DE); Boltze, Wolfgang, 67633 Kaiserslautern (DE); Becker, Karin, 67806 Rockenhausen (DE); Klippert, Larissa, 67685 Weilerbach (DE)
(74) Vertreter: Patentanwälte Hosenthien-Held und Dr. Held

(57) **Zusammenfassung**

Bei einem Beschlag (1) für einen Fahrzeugsitz, insbesondere für einen Kraftfahrzeugsitz, mit einem ersten Beschlagteil (5), einem am ersten Beschlagteil (5) gelagerten und relativ zu diesem schwenkbaren zweiten Beschlagteil (8), einer am ersten Beschlagteil (5) gelagerten Klinke (15), welche in einer Gebrauchsstellung des Beschlags (1) zum Verriegeln desselben mit dem zweiten Beschlagteil (8) zusammenwirkt und zum Übergang in eine Nichtgebrauchsstellung des Beschlags (1) entriegelt, übt das zweite Beschlagteil (8) bei der Rückkehr von der Nichtgebrauchsstellung in die Gebrauchsstellung ein schließendes Moment auf die Klinke (15) aus.

## Beschreibung

Die Erfindung betrifft einen Beschlag für einen Fahrzeugsitz, insbesondere für einen Kraftfahrzeugsitz, mit den Merkmalen des Oberbegriffs des Anspruches 1.

Um bei einem bekannten Beschlag dieser Art ein Verriegeln unabhängig von den Toleranzen zwischen erstem Beschlagteil, zweitem Beschlagteil und Klinke zu gewährleisten, ist das zweite Beschlagteil in der Gebrauchsstellung geringfügig vor der hintersten möglichen Stellung angeordnet. Dabei ist am Beschlag eine Kompensationsfeder vorgesehen, welche das zweite Beschlagoberteil von der hintersten möglichen Stellung nach vorne vorspannt, so daß die Gebrauchsstellung erreicht wird und die federvorbelastete Klinke einfallen kann.

Der Erfindung liegt die Aufgabe zu Grunde, einen Beschlag der eingangs genannten Art zu verbessern, insbesondere die Herstellung zu vereinfachen und kostengünstiger zu gestalten. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, daß bei der Rückkehr von der Nichtgebrauchsstellung in die Gebrauchsstellung das zweite Beschlagteil ein schließendes Moment auf die Klinke ausübt, ist ein Verriegeln der Klinke sichergestellt, ohne daß eine Kompensationsfeder benötigt wird. So kann der Beschlag mit einer geringeren Anzahl von Bauteilen und damit kostengünstiger und in vereinfachter Montage hergestellt werden. Bei Belastungen entgegen der Richtung der Nichtgebrauchsstellung wird zudem die Klinke durch das zweite Beschlagteil automatisch nachgesteuert und ein Öffnen verhindert.

Die Klinke weist vorzugsweise eine erste Kontur und das zweite Beschlagteil vorzugsweise eine zweite Kontur auf, mittels welcher es das schließende Moment auf die erste Kontur der Klinke ausübt. Die einstückige Ausbildung, welche durch die Bildung dieser Konturen als angeformte Materialpartien dieser Bauteile erreicht wird, ermöglicht eine Herstellung der Bauteile ohne Mehraufwand.

Zum Verriegeln des Beschlags sind vorzugsweise eine erste Verzahnung an der Klinke und eine zu dieser passende und mit dieser zusammenwirkende zweite Verzahnung am zweiten Beschlagteil vorgesehen. Als Verzahnung sollen nicht nur Anordnungen von gleich beabstandeten Zähnen oder Rasten nebeneinander angesehen werden, sondern auch einzelne Zähne, Rasten oder sonstige Elemente in dreieckigen, trapezartigen oder sonstigen Formen, die eine Schwenkbewegung des zweiten Beschlagteils verhindern. Für die Nichtgebrauchsstellung oder weitere Stellungen können am zweiten Beschlagteil weitere Verzahnungen vorgesehen sein, d.h. solche, die der zweiten Verzahnung gleichen.

Die Konturen und Verzahnungen sind entsprechend beabstandet zueinander vorgesehen, wobei die Konturen so geformt sind, daß sie ein exaktes Einsteuern der Verzahnungen ineinander bewirken. Um das schließende Moment zu erzeugen, sind die erste Verzahnung und die erste Kontur vorzugsweise bezüglich der Lagerung der Klinke, welche vorzugsweise durch einen ersten Lagerbolzen gebildet wird, an entgegengesetzten Enden der Klinke ausgebildet, worunter nicht nur ein exaktes radiales Gegenüberliegen verstanden werden soll, sondern auch ein solches, das im Verhältnis der Abmessungen der Klinke nur näherungsweise erfüllt ist.

Ohne Vorspannung des zweiten Beschlagteils erfolgt die Sicherung der Klinke im Normalfall vorzugsweise durch einen Spannexzenter, der die Klinke auf der vom zweiten Beschlagteil abgewandten Seite mit einem schließenden Moment beaufschlagt, also die Klinke mit ihrer ersten Verzahnung in die zweite Verzahnung des zweiten Beschlagteils drückt. Im Crashfall erfolgt die Sicherung der Klinke vorzugsweise durch ein Fangstück, welches die Klinke auf deren vom zweiten Beschlagteil abgewandten Seite abstützt, im Normalfall aber in geringem Abstand zur Klinke angeordnet ist. Beim Entriegeln des Beschlags kann dann unter Ausnutzung des geringen Abstandes zuerst das Fangstück geschwenkt werden, welches dann mit einer Zeitverzögerung den Spannexzenter mitnimmt, wodurch die Klinke frei wird.

Der erfindungsgemäße Beschlag ist vielseitig einsetzbar, beispielsweise zur Anlenkung der Lehne eines Fahrzeugsitzes, zur Neigungseinstellung einer Oberschenkelunterstützung oder zum sonstigen Klappen und Verriegeln eines Teiles des Fahrzeugsitzes. Im Falle der Anwendung bei einer Lehne hat der Beschlag zusätzlich den Vorteil, daß er bei einem Heckcrash durch das zusätzliche schließende Moment und das automatische Nachsteuern der Klinke sicherer verriegelt, d.h. höher belastbar oder geringer dimensionierbar ist.

Im folgenden ist die Erfindung anhand eines in der Zeichnung dargestellten Ausführungsbeispiels näher erläutert. Es zeigen
- Fig. 1: einen Schnitt durch das Ausführungsbeispiel nach dem Verlassen der Nichtgebrauchsstellung,
- Fig. 2: einen Schnitt entsprechend Fig. 1 beim Übergang in die Gebrauchsstellung vor dem Kontakt zwischen Klinke und zweitem Beschlagteil,
- Fig. 3: einen Schnitt entsprechend Fig. 2 beim Kontakt zwischen Klinke und zweitem Beschlagteil,
- Fig. 4: einen Schnitt entsprechend Fig. 3 in der Gebrauchsstellung, und
- Fig. 5: einen schematisch dargestellten Fahrzeugsitz.

Ein als Rastbeschlag ausgebildeter Beschlag 1 weist ein längliches, hohles erstes Beschlagteil 5, welches in sich einen Bauraum definiert, und ein ebenfalls längliches, flaches zweites Beschlagteil 8 auf, das teilweise in den Bauraumes eingetaucht und mittels eines eine Schwenkachse definierenden Gelenkbolzens 10 relativ zum ersten Beschlagteil 5 schwenkbar gelagert ist. Die nachfolgenden Richtungsangaben beziehen sich auf das Zylinderkoordinatensystem, welches durch diese Schwenkachse definiert ist.

Eine auf einem zum Gelenkbolzen 10 parallelen ersten Lagerbolzen 13 am ersten Beschlagteil 5 innerhalb dessen Bauraumes schwenkbar gelagerte Klinke 15 weist eine einfache erste Verzahnung 17 auf. Am zweiten Beschlagteil 8 ist in dem Bereich, der in den Bauraum des ersten Beschlagteils 5 eintaucht, eine weitere einfache, zweite Verzahnung 18 ausgebildet, welche konzentrisch zum Gelenkbolzens 10 gekrümmt ist. Die Klinke 15 wirkt mittels ihrer ersten Verzahnung 17 mit dieser zweiten Verzahnung 18 des zweiten Beschlagteils 8 zusammen, um den Beschlag 1 in dieser sogenannten Gebrauchsstellung zu verriegeln. Zur Sicherung dieses Eingriffs im Normalfall ist auf einem zum Gelenkbolzen 10 parallelen zweiten Lagerbolzen 19 ein Spannexzenter 21 schwenkbar gelagert, welcher im Normalfall federbelastet an einem Steuernocken 23 der Klinke 15 auf der von der zweiten Verzahnung 18 abgewandten Seite anliegt und die Klinke 15 mit einem schließenden Moment beaufschlagt. Auf dem zweiten Lagerbolzen 19 ist axial neben dem Spannexzenter 21 ein Fangstück 25 schwenkbar gelagert, welches im Normalfall in einem geringen (gegenüber der Zahnhöhe der zweiten Verzahnung 18 und der Klinke 15 kleineren) Abstand zur Klinke 15 auf der von der zweiten Verzahnung 18 abgewandten Seite angeordnet ist und im Crashfall die Klinke 15 abstützt, um ein Öffnen der Klinke 15 und damit ein ungewolltes Entriegeln des Beschlags 1 zu verhindern.

Zum Entriegeln des Beschlags 1 wird ein vom Fangstück 25 seitlich abstehender und durch ein Fenster 27 des Spannexzenters 21 ragender Entriegelungsbolzen 29 bewegt, welcher zunächst das Fangstück 25 schwenkt und nach Überstreichen der Breite des Fensters 27, also mit einer Zeitverzögerung, den Spannexzenter 21 mitnimmt. Die Klinke 15 ist dadurch frei und öffnet mit einer beginnenden Bewegung des zweiten Beschlagteils 8. Beim Zurückschwenken des zweiten Beschlagteils 8 ist eine Zwangsverriegelung der Klinke 15 mit Erreichen der hintersten Stellung vorgesehen. Hierzu weist die Klinke 15 an ihrem hinteren Ende, welches beim ersten Lagerbolzen 13 vorgesehen ist, auf der dem zweiten Beschlagteil 8 zugewandten Seite eine erste Kontur 31 auf, d.h. eine radial leicht vorspringende, angeformte, nockenartige Materialpartie. Das zweite Beschlagteil 8 weist im entsprechenden Bereich, also von der zweiten Verzahnung 18 beabstandet, eine zweite Kontur 32 auf, die ebenfalls durch eine radial leicht vorspringende, angeformte, nockenartige Materialpartie gebildet wird.

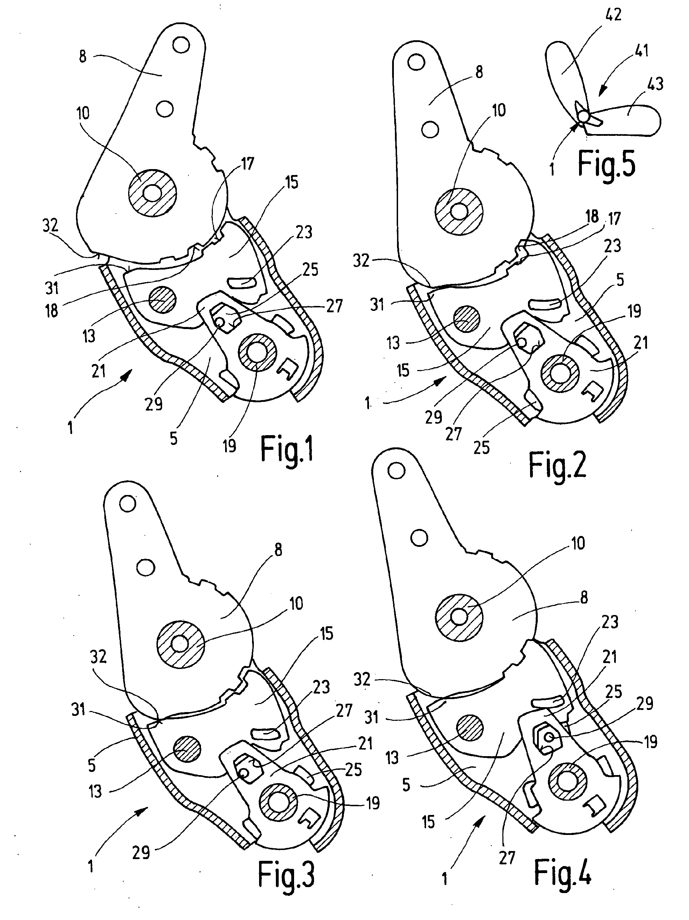

Ausgehend von einem entriegelten und vorgeschwenkten zweiten Beschlagteil 8, also einer geklappten Nichtgebrauchsstellung des Beschlags 1, wird für einen Übergang des Beschlags 1 in die Gebrauchsstellung das zweite Beschlagteil 8 zurückgeschwenkt, wie in Fig. 1 und 2 dargestellt, wobei die Bewegung entgegen dem Uhrzeigersinn erfolgt. Kurz vor Erreichen der Gebrauchsstellung gelangt die zweite Kontur 32 des zweiten Beschlagteils 8 in Kontakt mit der ersten Kontur 31 der Klinke 15, wie in Fig. 3 dargestellt. Das zweite Beschlagteil 8 übt dabei mittels der zweiten Kontur 32 ein schließendes Moment auf die Klinke 15 an deren erster Kontur 31 aus, wodurch die Klinke 15 auf das zweite Beschlagteil 8 zu schwenkt und in die zweite Verzahnung 18 einfällt, wie in Fig. 4 dargestellt. Der Beschlag 1 befindet sich nun in seiner Gebrauchsstellung.

Der Beschlag 1 ist im vorliegenden Ausführungsbeispiel bei einem Fahrzeugsitz 41 einer hinteren Sitzreihe eines Kraftfahrzeuges eingesetzt, wo er zur Neigungseinstellung einer Lehne 42 relativ zu einem Sitzteil 43 des Fahrzeugsitzes 41 dient. Dabei ist das erste Beschlagteil 5 an der Struktur des Sitzteils 43 angebracht, während die Lehne 42 am zweiten Beschlagteil 8 befestigt ist. Die erfindungsgemäße Zwangsverriegelung ist auch bei einem Heckcrash sehr vorteilhaft, wenn die Lehne 42 und damit das zweite Beschlagteil 8 relativ zum ersten Beschlagteil 5 nach hinten beschleunigt wird, d.h. in der Zeichnung gegen den Uhrzeigersinn. Dabei drückt die zweite Kontur 32 stärker auf die erste Kontur 31, so daß sich das schließende Moment auf die Klinke 15 erhöht. Damit steuert die Klinke 15 automatisch nach, so daß die beiden Verzahnungen 17 und 18 fest in Eingriff miteinander bleiben.

### Bezugszeichenliste

- 1: Beschlag
- 5: erstes Beschlagteil
- 8: zweites Beschlagteil
- 10: Gelenkbolzen
- 13: erster Lagerbolzen
- 15: Klinke
- 17: erste Verzahnung
- 18: zweite Verzahnung
- 19: zweiter Lagerbolzen
- 21: Spannexzenter
- 23: Steuernocken
- 25: Fangstück
- 27: Fenster
- 29: Entriegelungsbolzen
- 31: erste Kontur
- 32: zweite Kontur
- 41: Fahrzeugsitz
- 42: Lehne
- 43: Sitzteil

## Patentansprüche

1. Beschlag für einen Fahrzeugsitz, insbesondere für einen Kraftfahrzeugsitz, mit einem ersten Beschlagteil (5), einem am ersten Beschlagteil (5) gelagerten und relativ zu diesem schwenkbaren zweiten Beschlagteil (8), einer am ersten Beschlagteil (5) gelagerten Klinke (15), welche in einer Gebrauchsstellung des Beschlags (1) zum Verriegeln desselben mit dem zweiten Beschlagteil (8) zusammenwirkt und zum Übergang in eine Nichtgebrauchsstellung des Beschlags (1) entriegelt, **dadurch gekennzeichnet, daß** bei der Rückkehr von der Nichtgebrauchsstellung in die Gebrauchsstellung das zweite Beschlagteil (8) ein schließendes Moment auf die Klinke (15) ausübt.

2. Beschlag nach Anspruch 1, **dadurch gekennzeichnet, daß** die Klinke (15) eine erste Kontur (31) aufweist und das zweite Beschlagteils (8) mittels einer zweiten Kontur (32) das schließende Moment auf die Klinke (15) ausübt.

3. Beschlag nach Anspruch 1 oder 2, **dadurch gekennzeichnet, daß** die Klinke (15) eine erste Verzahnung (17) aufweist, mittels welcher sie mit einer zweiten Verzahnung (18) des zweiten Beschlagteils (8) zum Verriegeln des Beschlags (1) zusammenwirkt.

4. Beschlag nach Anspruch 2 und 3, **dadurch gekennzeichnet, daß** die zweite Kontur (32) beabstandet zur zweiten Verzahnung (18) am zweiten Beschlagteil (8) ausgebildet ist.

5. Beschlag nach einem der Ansprüche 1 bis 4, **dadurch gekennzeichnet, daß** das zweite Beschlagteil (8) mittels eines Gelenkbolzens (10) relativ zum ersten Beschlagteil (5) schwenkbar ist und die Klinke (15) mittels eines zum Gelenkbolzen (10) parallelen ersten Lagerbolzens (13) am ersten Beschlagteil (5) gelagert ist.

6. Beschlag nach Anspruch 2, 3 und 5, **dadurch gekennzeichnet, daß** die erste Verzahnung (17) und die erste Kontur (31) bezüglich des ersten Lagerbolzens (13) an entgegengesetzten Enden der Klinke (15) ausgebildet sind.

7. Beschlag nach einem der Ansprüche 1 bis 6, **dadurch gekennzeichnet, daß** im Normalfall ein Spannexzenter (21) die Klinke (15) auf der vom zweiten Beschlagteil (8) abgewandten Seite mit einem schließenden Moment beaufschlagt.

8. Beschlag nach einem der Ansprüche 1 bis 7, **dadurch gekennzeichnet, daß** im Crashfall ein Fangstück (25) die Klinke (15) auf der vom zweiten Beschlagteil (8) abgewandten Seite abstützt.

9. Beschlag nach Anspruch 7 und 8, **dadurch gekennzeichnet, daß** beim Entriegeln des Beschlags (1) zuerst das Fangstück (25) schwenkt, welches mit einer Zeitverzögerung den Spannexzenter (21) mitnimmt.

10. Fahrzeugsitz (41) mit einer Lehne (42), **gekennzeichnet durch** einen Beschlag (1) nach einem der Ansprüche 1 bis 9 zur Anlenkung der Lehne (42).
